# EUROPEAN PATENT SPECIFICATION

(11) **EP 3 402 028 B1**
(45) Date of publication and mention of the grant of the patent: **06.01.2021**
(21) Application number: 18158840.1
(22) Date of filing: 27.02.2018
(51) Int. Cl.: H02H 11/00, H02H 3/14

(54) **ELECTRONIC CIRCUIT FOR SELF-IDENTIFYING ZERO WIRE AND HEAT GENERATING PLATE HAVING THE SAME**
ELEKTRONISCHE SCHALTUNG FÜR SELBSTIDENTIFIZIERENDE NULLLEITUNG UND WÄRMEERZEUGUNGSPLATTE DAMIT
CIRCUIT ÉLECTRONIQUE D'AUTO-IDENTIFICATION SANS FIL ET PLAQUE DE GÉNÉRATION DE CHALEUR L'UTILISANT

(30) Priority: 11.05.2017 CN 201720524285 U; 31.05.2017 CN 201710402240
(43) Date of publication of application: 14.11.2018
(73) Proprietor: Xuzhou Goton Technology Co., Ltd., 221000 Jiangsu (CN)
(72) Inventor: Li, Kefei, Jiangsu 221000 (CN)
(74) Representative: Ipside

(56) References cited:
- US-A- 4 492 878
- US-A1- 2008 024 138
- US-A1- 2015 194 804

## Description

### Cross-Reference to Related Application

The present application claims the priority to a Chinese patent application No.CN2017205242858, filed with the State Intellectual Property Office on May 11, 2017 and entitled "Heat Generating Plate for Suppressing Excessive Leakage Current" and to a Chinese patent application No.CN2017104022408, filed with the State Intellectual Property Office on May 31, 2017 and entitled "Electronic Circuit for Self-Identifying Zero Wire".

### Technical Field

The present invention relates to the technical field of electronic circuits, and particularly to an electronic circuit for self-identifying a zero wire and a heat generating plate having the same.

### Background Art

In the industrial field, an electrical device often operates at a high voltage. In order to prevent safety accidents caused by circuit failures and malfunction of devices, the operator usually adds a leakage protector into the circuit. In case of an electric leakage, the leakage protector initiates a tripping operation, such that a machine is not powered and stops operating to avoid occurrence of dangers.

Document US2015/0194804 A1 discloses a leakage prevention device for allowing normal operation of the electrical devices.

However, the aging of circuits or the malfunction of devices often happens in actual operation, which causes an incorrect contact between a live wire and a zero wire. Once the incorrect wiring occurs, the current leakage would be excessive or a housing of the device would be electrified, which would affect severely the operating progress of a system. Moreover, due to the incorrect wiring of the live wire and the zero wire, the leakage protector fails to operate normally.

Therefore, it is necessary to devise a solution to ensure that, even if the incorrect wiring occurs, the phenomena such as the excessive current leakage in parts of the machine, the electrified machine housing and the abnormal operation of the leakage protector due to the incorrect wiring between the live wire and the zero wire, would not happen, thereby it is possible to ensure the normal operation of the system and prevent the occurrence of safety accidents.

### Disclosure of the Invention

In view of the above, an object of the present invention is to provide an electronic circuit for self-identifying a zero wire and a heat generating plate having the same, so as to alleviate the above shortcomings. The present invention is defined in the appended independent apparatus claim 1. Embodiments of the invention are defined in the appended dependent claims.

In order to achieve the above object, an embodiment of the present invention provides an electronic circuit for self-identifying a zero wire. The electronic circuit for self-identifying a zero wire includes: a live wire, a zero wire and a voltage sampling terminal, the zero wire forming a loop with the live wire, and the voltage sampling terminal connected with a protective ground wire via a first resistor, and further includes: a voltage comparing circuit configured to compare a voltage at the voltage sampling terminal with a divided voltage of the electronic circuit, and a selecting circuit configured to be connected with an output terminal of the voltage comparing circuit and select, based on an output signal of the voltage comparing circuit, a branch where the zero wire is located.

In one example implementation, there can be provided a heat generating plate. The heat generating plate includes a heat generating layer and a first insulating layer located above the heat generating layer. Specifically, a first zero wire connecting layer is provided between the first insulating layer and the heat generating layer and is configured to be connected with a zero wire circuit. A second zero wire connecting layer is provided under the heat generating layer and is configured to be connected with the zero wire circuit. The heat generating plate is provided thereon with the electronic circuit for self-identifying a zero wire described above.

Compared with the prior art, the invention has the following advantages: under a normal operation of the electronic circuit for self-identifying a zero wire, the second contact G of the double throw switch is normally closed, and in case of correct wirings of the live wire J1 and the zero wire J2, the voltage transmitted from the voltage sampling terminal D to the non-inverting input terminal of the operational amplifier U1 is lower than a voltage transmitted to an inverting input terminal of the operational amplifier which is obtained by the voltage dividing circuit dividing the voltage rectified by the rectifying circuit, so that the output signal obtained at the second stage of the operational amplifier is at a low level, and thus, the corresponding triode Q1 is off, the relay coil does not operate, and the double throw switch keeps the G terminal closed. In this case, a zero wire layer of an external device connected with the electronic circuit is kept in connection with the zero wire J2, and the device operates normally. In case of an incorrect wiring where the zero wire J2 is connected with the live wire and the live wire J1 is connected with the zero wire, the voltage transmitted from the voltage sampling terminal D to the non-inverting input terminal of the operational amplifier U1 is higher than the voltage transmitted to the inverting input terminal of the operational amplifier which is obtained by the voltage dividing circuit dividing the voltage rectified by the rectifying circuit, so that the output signal obtained at the second stage of the operational amplifier is at a high level, the corresponding triode Q1 is on, the relay coil operates to drive the double throw switch to switch to the first contact F. In this case, the zero wire layer of the external device is connected with the live wire J1, and the live wire J1 is in turn connected with the zero wire, the external device is still in a safe state, thereby avoiding a problem in prior art that accidents frequently occur due to the incorrect wiring which would causes phenomena such as an excessive leakage, an electrified machine housing, and an abnormal operation of a leakage protector.

### Brief Description of Drawings

In order to more clearly illustrate technical solutions of embodiments of the present invention, figures which are used for describing the embodiments will be introduced briefly below. It should be understood that the figures below merely show some embodiments of the present invention, and therefore should not be considered as limiting the scope. For a person ordinarily skilled in the art, other relevant figures can also be obtained in light of these figures, without paying inventive efforts.
Fig. 1 is a schematic diagram of an electronic circuit provided by an embodiment of the present invention; and
Fig. 2 is a schematic structural diagram of a heat generating plate provided by an embodiment of the present invention.

### Reference signs:

1-heat generating layer; 11-third insulating layer; 12-heat generating face; 121-first heat generating element layer; 122-second zero wire layer; 123-phase wire layer; 2-first zero wire connecting layer; 21-second insulating layer; 221-first electrically conductive layer; 222-first zero wire layer; 3-second zero wire connecting layer; 31-fourth insulating layer; 321-second electrically conductive layer; 322-third zero wire layer; and 4-first insulating layer.

### Detailed Description of Embodiments

In order to make the objections, the technical solutions and the advantages of embodiments of the present invention clearer, technical solutions of embodiments of the present invention will be described clearly and completely hereafter, in conjunction with drawings used for the embodiments of the present invention. Apparently, the described embodiments are merely some of embodiments but not all embodiments of the present invention. Generally, components of the embodiments of the present disclosure, which are described and shown in the drawings herein, can be arranged and designed in different configurations.

Therefore, the detailed description below of the embodiments of the present invention provided in the drawings is not intended to limit the scope of protection of the present invention, but merely represents chosen embodiments of the present invention. All the other embodiments, obtained by a person ordinarily skilled in the art based on the embodiments of the present invention without paying inventive efforts, fall within the scope of protection of the present invention.

It should be noted that similar reference signs and letters represent similar items in the following drawings. Therefore, once an item is defined in one drawing, it will not be further defined or explained in subsequent drawings.

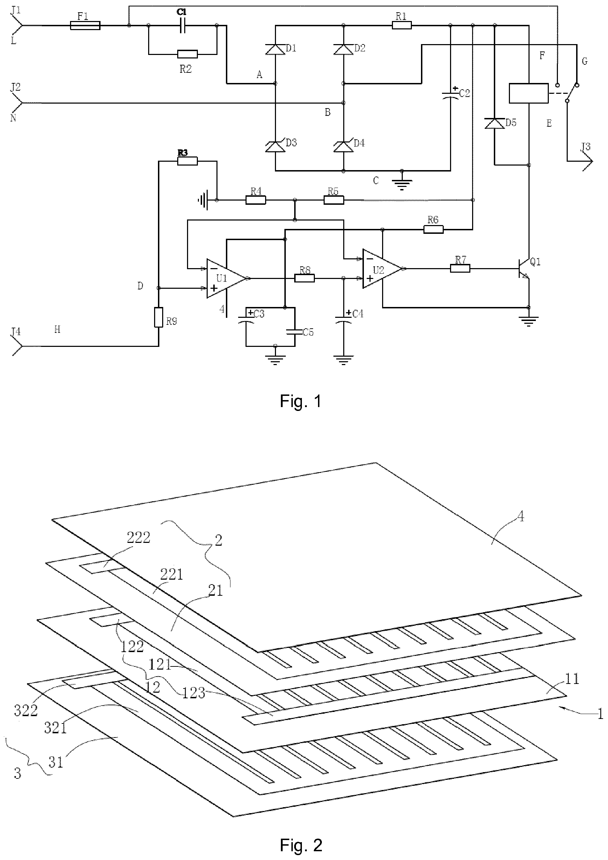

Referring to Fig. 1, an electronic circuit for self-identifying a zero wire provided by a preferred embodiment of the present invention is shown. The electronic circuit includes a live wire J1, a zero wire J2 and a protective ground wire J4, the zero wire forming a loop with the live wire J1.

The live wire J1 is connected thereon with an overcurrent protection fuse F1, a step-down circuit and a rectifying circuit. The step-down circuit is consisted of a seventh resistor R2 and a first capacitor C1 connected in parallel with each other. An anode of a rectifying circuit is connected with the live wire through the step-down circuit, and a cathode of the rectifying circuit is connected with the zero wire J2. The rectifying circuit includes a first diode D1, a second diode D2, a first voltage regulator tube D3 and a second voltage regulator tube D4. An anode of the first diode D1 is connected with the step-down circuit and a cathode of the first voltage regulator tube D3, a cathode of the first diode D1 is connected with a cathode of the second diode D2, an anode of the second diode D2 is connected with the zero wire and a cathode of the second voltage regulator tube D4, and an anode of the first voltage regulator tube D3 and an anode of the second voltage regulator tube D4 are grounded. The cathode of the second diode D2, i.e., the output terminal of the rectifying circuit, is connected with one terminal of an eighth resistor R1. The other terminal of the eighth resistor R1 is connected with one terminal of a first polar capacitor C2. The other terminal of the first polar capacitor C2 is grounded. The eighth resistor R1 and the first polar capacitor C2 form a first filtering circuit for filtering the rectifying circuit. The live wire J1 is connected with the anode of the first diode D1 at point A, the zero wire J2 is connected with the anode of the second diode D2 at point B, and the anode of the first voltage regulator tube D3 is connected with the anode of the second voltage regulator tube D4 at point C.

The overcurrent protection fuse is configured to prevent the circuit burnout due to excessive high voltage and overcurrent. The step-down circuit divides, through a voltage step-down operation, an alternating current (AC) voltage into voltages suitable for subsequent circuits, so as to ensure safety of a circuit system. The rectifying circuit, in combination with the first filtering circuit, uses the unidirectional conductivity of a diode to change the AC voltage switching between positive polarity and negative polarity into a unidirectional ripple voltage, that is, convert the AC power into direct current (DC) power for operation of loads. The filtering circuit is used to eliminate AC component in the DC power as much as possible, so that the output power voltage is more stable, so as to ensure the stability of the circuit. Moreover, by using dual voltage regulator tubes, the rectifying circuit can keep efficiently the input voltage of the voltage dividing circuit stable and unchanged. Therefore, a reference comparison value is provided for the subsequent voltage comparison, which facilitates the implementation of operating principle of the system.

Furthermore, the other terminal of the eighth resistor R1 is also connected with the voltage dividing circuit, a selecting circuit and a driving circuit. Here, the voltage dividing circuit includes a third resistor R5 and a fourth resistor R4. The third resistor is connected with the other terminal of the eighth resistor R1. One terminal of the fourth resistor R4 is connected in series with the third resistor R5 and the other terminal of the fourth resistor R4 is grounded, and thus, the power voltage of the electronic circuit is divided, and the divided voltage is transmitted to the voltage comparing circuit. The protective ground wire J4 includes a sixth resistor R3 and a first resistor R9, one terminal of the sixth resistor being connected in series with one terminal of the first resistor, the other terminal of the sixth resistor R3 being connected with the other terminal of the fourth resistor R4, and the other terminal of the first resistor R9 is connected with the protective ground wire J4. A voltage sampling terminal D is formed between the sixth resistor R3 and the first resistor R9. Of course, the first resistor R9 may also be connected with the protective ground wire J4 through a serially connected capacitor, for example, connected with the protective ground wire J4 through a serially connected Y capacitor.

The selecting circuit includes a relay coil, a third diode D5, a single-pole double throw switch and a triode Q1, the third diode, across both terminals of the relay coil, is connected in parallel with the relay coil, the single-pole double throw switch acts in cooperation with the relay coil. One terminal of the relay coil is connected with the other terminal of the eighth resistor R1, and the other terminal of the relay coil is connected with a collector of the triode Q1. A base of the triode Q1 is connected with an output terminal of the voltage comparing circuit through a fifth resistor R7. An emitter of the triode is grounded. A first contact F of the single-pole double throw switch is connected between the overcurrent protection fuse F1 and the step-down circuit, a second contact G is connected with the anode of the second diode D2. The G terminal is normally closed. A fixed terminal E of the double throw switch is connected with a zero wire layer J3 of an external device. Of course, in the present embodiment, the single-pole double throw switch may also be replaced with other switches for conversion selection, such as a double-pole double throw switch. Those skilled in the art may make selections correspondingly according to actual demands, which will not be detailed herein.

The voltage comparing circuit includes two amplifiers, i.e., a first operational amplifier U1 and a second operational amplifier U2. The non-inverting input terminal of the first operational amplifier U1 is connected with the voltage sampling terminal D, and an output terminal of the first operational amplifier is connected with a non-inverting input terminal of the second operational amplifier U2 through the second resistor R8. The inverting input terminal of the first operational amplifier U1 and the inverting input terminal of the second operational amplifier U2 each are connected with a voltage obtained by dividing the power voltage by the voltage dividing circuit. The base of the triode Q1 is connected with the output terminal of the second operational amplifier U2.

The driving circuit includes a ninth resistor R6, and one terminal of the ninth resistor is connected with the one terminal of the relay coil. A voltage drop across the ninth resistor R6 is connected at the other terminal, through two branches, with the driving terminals of the first operational amplifier U1 and the second operational amplifier U2, so as to provide driving power.

Furthermore, the circuit further includes a second filtering circuit for filtering the first operational amplifier U1, and a third filtering circuit for filtering the second operational amplifier U2. There may be various types of filtering circuits to be selected. Specifically, in the present embodiment, the second filtering circuit includes a second capacitor C5 and a second polar capacitor C3 connected in parallel with each other at both terminals. One terminals of the second capacitor and the second polarity capacitor are connected with the other terminal of the ninth resistor R6, and the other terminals is grounded. The third filtering circuit is a third polar capacitor C4. One terminal of the third polar capacitor is connected with the non-inverting input terminal of the second operational amplifier U2, and the other terminal of the third polar capacitor is grounded. It is ensured that the operational amplifier can operate more stably by designing a filtering circuit for each operational amplifier.

The specific operation of the electronic circuit is described as follows.

Resistance of the seventh resistor R2 is set to be 200 KΩ, resistances of the eighth resistor R1 and the ninth resistor R6 each are set to be 100 Ω, resistances of the fourth resistor R4 and the third resistor R5 each are set to be 10 KΩ, the resistances of the sixth resistor R3 and the first resistor R9 each are set to be 10 MΩ, and resistances of the fifth resistor R7 and the second resistor R8 each are set to be 1 KΩ.

In the case where the live wire J1 is normally connected with a live wire and the zero wire J2 is normally connected with a zero wire, the protective ground wire J4 is grounded at point H, and thus the point B and point H are at equal potential, equivalently, the voltage at the point B is equal to the voltage at the voltage sampling terminal D. Therefore, the change of the voltage at point B would not influence the voltage at voltage sampling terminal D. The voltage at the voltage sampling terminal D is mainly obtained as follows: the live wire J1 is decreased by a resistance-capacitance step down converter to the voltage at point A , and the decreased voltage at point A (about 12V) decrease to a voltage at point C through the first voltage regulator tube D3. Thus, the voltage at the point C is about 1/4 of the voltage at the point A, i.e., 3V. The voltage at the voltage sampling terminal D is 1/2 of the voltage at the point C through the voltage division of the sixth resistor R3 and the first resistor R9, that is, the voltage at the voltage sampling terminal D is about 1.5V. The voltage at the inverting input terminal of the first operational amplifier U1 is about 6V which is obtained through the voltage division of the fourth resistor R4 and the third resistor R5. Since the voltage at the voltage sampling terminal D is smaller than the voltage at the inverting input terminal of the first operational amplifier U1, the output terminal of the first operational amplifier U1 outputs a low level, and the output terminal of the second operational amplifier U2 also outputs a low level, which leads to that the triode Q1 is off, the relay coil does not operate, and the normally closed G terminal of the double throw switch is still closed. That is to say, the point E of the double throw switch is connected with the output of the zero wire J2 via G point, so as to ensure the safety of the external device at the rear end.

In case of an incorrect wiring where the live wire J1 is connected with the zero wire and the zero wire J2 is connected with the live wire, point A and point H are at equal potential, equivalently, the voltage at the point A is equal to the voltage at the voltage sampling terminal D. Therefore, the change of the voltage at point A would not influence the voltage at voltage sampling terminal D. The voltage at the voltage sampling terminal D is mainly obtained as follows: the voltage at the point B of J2 (about 220V) is decreased to the voltage at point C via the second voltage regulator tube D4. Thus, the voltage at the point C is about 1/4 of the voltage at the point B, that is, the voltage at the point C is about 55V. Through the voltage division of R3 and R9, the voltage at the voltage sampling terminal D is 1/2 of the voltage at point C, that is, the voltage at the voltage sampling terminal D is about 27.5V. The voltage at the inverting input terminal of the first operational amplifier U1 is about 6V which is obtained through the voltage division of the fourth resistor R4 and the third resistor R5. Since the voltage at the voltage sampling terminal D is higher than the voltage at the inverting input terminal of the first operational amplifier U1, a high level is outputted, and the second operational amplifier U2 also outputs a high level, which causes the triode Q1 to be on, the relay coil operates, and the double throw switch is attracted to be closed at the F terminal. That is to say, the Point E is connected with J1 via the point F, and in this case, due to the incorrect wiring where the J1 is connected with the zero wire, it is ensured that the external device at the rear end is still in connection with the zero wire circuit, thus ensuring the safety. That is to say, even if the wiring is incorrect in the system due to circuit issues or other reasons, the present circuit can still self-identify the zero wire, and ensure that the external device at the rear end is always in contact with the zero wire, thereby avoiding phenomena present in the prior art due to incorrect wiring, such as an excessive leakage, an electrified machine housing and an abnormal operation of a leakage protector.

Fig. 2 shows a structural diagram of a preferred heat generating plate. The heat generating plate is provided thereon with the above-mentioned electronic circuit for self-identifying a zero wire. As shown in Fig. 2, the heat generating plate includes a heat generating layer 1, a first zero wire connecting layer 2, a second zero wire connecting layer 3, and a first insulating layer 4 located above the first zero wire connecting layer 2, the first zero wire connecting layer and the second zero wire connecting layer located above and under the heat generating layer, respectively.

The first zero wire connecting layer 2 includes a second insulating layer 21, a first electrically conductive layer 221 coated on the second insulating layer 21, and a first zero wire layer 222, specifically, the first zero wire layer is located above one side of the first electrically conductive layer 221 and configured to be connected with the zero wire circuit. The second insulating layer 21 is in contact with the heat generating face of the heat generating layer 1.

The heat generating layer 1 includes a third insulating layer 11 and a first heat generating element layer 121 coated on the third insulating layer 11. Two sides of the first heat generating element layer 121 are covered thereon with a second zero wire layer 122 and a phase wire layer 123, respectively. The first heat generating element layer 121 together with the zero wire layer 122 and phase wire layer 123 corresponding to the first heat generating element layer form the heat generating face of the heat generating layer 1. Here, the heat generating element layer 121 of the heat generating layer 1 may be made of a heat generating material such as carbon paste, carbon fiber, graphene, alloy paste or an alloy wire. The heat generating element layer 121 is formed through printing with the carbon paste. If the printing is unqualified, the heat generating plate may be used as a zero wire layer, which avoids such a waste that the heat generating plate is useless due to the unqualified printing.

The second zero wire connecting layer 3 includes a fourth insulating layer 31, a second electrically conductive layer 321 coated on the fourth insulating layer 31, and a third zero wire layer 322, the zero wire layer is located on one side of the second electrically conductive layer 321 and configured to be connected with the zero wire. The fourth insulating layer 31 is away from the third insulating layer 11 of the heat generating layer 1. Of course, the first electrically conductive layer 221 and the second electrically conductive layer 321 may be made of a conductor such as carbon paste, carbon fiber, graphene, alloy paste, an alloy wire, a copper foil or an aluminum foil.

Specifically, the first electrically conductive layer 221, the first heat generating element layer 121, and the second electrically conductive layer 321 each are formed by coating nanoscale carbon ions, meanwhile, resistances of the first electrically conductive layer 221 and the second electrically conductive layer 321 each are smaller than resistance of the first heat generating element layer 121. In this way, the first electrically conductive layer 221 and the second electrically conductive layer 321 will have good conductivity, and the first heat generating element layer 121 will have good heat generating performance. Of course, the coating may be performed in a striping pattern or other pattern s, which are not detailed herein.

Of course, the zero wire layer and the phase wire layer may be each provided in number of one or more according to specific conditions, and may be made of an electrically conductive material such as the copper foil, the aluminum foil or a silver paste. The zero wire layer and the phase wire layer are bonded to the electrically conductive layer or the heat generating layer by hot pressing.

The insulating layer may be made of an organic insulating material such as epoxy glass fiber cloth, PET film, PI film and a silicone rubber cloth, or made of an inorganic insulating material such as a mica plate and a ceramic glass. For example, the insulating layer may be an insulating epoxy layer.

In the embodiments provided in the present application and related description of the embodiments, it should be understood that, unless otherwise expressly specified or defined, terms "mount", "link", and "connect" should be understood in a inclusive sense. For example, a connection may be a fixed connection, or a detachable connection, or an integrated connection; may be a mechanical connection or an electric connection; or may be a direct connection, or an indirect connection via an intermediate medium, or may be an internal communication between two elements. The specific meanings of the above-mentioned terms in the present invention could be understood by those skilled in the art according to specific situations.

In the description of the present invention, it should be indicated that orientation or positional relations indicated by terms such as "center", "up", "down", "left", "right", "vertical", "horizontal", "inside", and "outside" are the orientation or positional relations as shown in the figures, and are only for facilitating description of the present invention and simplifying the description, rather than indicating or implying that the referred devices or elements must be in a particular orientation or constructed or operated in the particular orientation, and thus should not be construed as limiting the present invention. In addition, terms such as "first", "second", and "third" are used only for description, and should not be understood as indicating or implying a relative importance.

Finally, it should be noted that the above embodiments are merely specific implementations of the present application, and are intended to explain the technical solutions of the invention, rather than limiting the invention. The scope of protection of the present application is not limited thereto. Although the present invention has been explained in detail with reference to the foregoing embodiments, it would be understood by an ordinary skilled in the art that, within the scope of technique disclosed in the present application, any technical personnel familiar with the technical field of the invention could make modifications or changes, which easily occur, to the technical solutions described in the foregoing embodiments, or could substitute some or all of the technical features with equivalents. Moreover, such modifications, changes or substitutions will not make the principle of the corresponding technical solutions of the present application depart from the spirit and scope of the technical solutions of the embodiments of the invention, and should be covered within the scope of protection of the present application. Therefore, the scope of protection of the present application should be defined by the scope of protection of the claims.

The foregoing descriptions are merely specific implementations of the present invention, and the scope of protection of the present invention is not limited thereto. Any changes or substitutions that readily occur to any technical personnel familiar with the technical field, within the scope of technique disclosed in the invention, should be covered by the scope of protection of the present invention. Therefore, the scope of protection of the present application should be defined by the scope of protection of the claims.

### Industrial Practicability

With the electronic circuit for self-identifying a zero wire and a heat generating plate having the same provided by embodiments of the present invention, in case of a correct wiring, the device operates normally; while in case of an incorrect wiring where the zero wire is connected with the live wire and the live wire is connected with the zero wire, the external device is still in a safe state, thereby avoiding a problem in the prior art that accidents frequently occur due to an incorrect wiring, the incorrect wiring causes a phenomena, such as an excessive leakage, an electrified machine housing, and an abnormal operation of a leakage protector. Moreover, since the heat generating plate is provided with zero wire layer on both sides of the heat generating layer, there is no leakage current at a machine housing when the machine operates, thereby safety performance of the machine is ensured.

## Claims

1. An electronic circuit for self-identifying a zero wire, comprising a live wire port (J1), a zero wire port (J2) and a voltage sampling terminal (D), the zero wire port and the live wire (J1) forming a loop, and the voltage sampling terminal being connected with a protective ground wire (J4) via a first resistor (R9), **characterized in that** the electronic circuit further comprises:
a rectifying circuit, located between a voltage dividing circuit and the live wire (Jl) and configured to rectify alternating current from the live wire (J1) to output a stable power voltage, wherein the rectifying circuit comprises a first diode (D1), a second diode (D2), a first voltage regulator tube (D3) and a second voltage regulator tube (D4), wherein an anode of the first diode (D1) is connected with a cathode of the first voltage regulator tube (D3) and is connected with the live wire (J1) through a step-down circuit, a cathode of the first diode (D1) is connected with a cathode of the second diode (D2), an anode of the second diode (D2) is connected with the zero wire (J2) and a cathode of the second voltage regulator tube (D4), an anode of the first voltage regulator tube (D3) is connected with a working ground end and an anode of the second voltage regulator tube (D4)
the voltage dividing circuit, configured to divide a voltage output by the rectifying circuit and transmit fixed voltage obtained by the dividing to a voltage comparing circuit;
the protective ground wire (J4), connected with the working ground end of the rectifying circuit through the first resistor (R9) and a sixth resistor (R3) which are connected in series, wherein the voltage sampling terminal (D) is provided between the sixth resistor (R3) and the first resistor (R9);
the voltage comparing circuit configured to compare a voltage at the voltage sampling terminal (D) with a voltage obtained by dividing the voltage output by the rectifying circuit; and
a selecting circuit configured to be connected with an output terminal of the voltage comparing circuit, and select, based on an output signal of the voltage comparing circuit, a branch where the zero wire is located,
wherein when the live wire (J1) is connected with a live wire port and the zero wire (J2) is connected with a zero wire port, a voltage between the working ground end of the rectifying circuit and the protective ground wire (J4) is a voltage obtained after a voltage input from the live wire (J1) is processed by the step-down circuit and the first voltage regulator tube (D3), the voltage at the voltage sampling terminal (D) is lower than the voltage obtained by dividing the voltage output by the rectifying circuit after the voltage at the working ground end of the rectifying circuit is divided by the six resistor (R3) and the first resistor (R9), and the voltage comparing circuit controls the selecting circuit to select the zero wire (J2) is the branch where the zero wire is located, so that the zero wire (J2) is connected with a zero wire layer (J3); and
when the live wire (J1) is connected with the zero wire port and the zero wire (J2) is connected with the live wire port, the voltage between the working ground end of the rectifying circuit and the protective ground wire (J4) is a voltage obtained after a voltage input from the zero wire (J2) is processed by the second voltage regulator tube (D4), the voltage at the voltage sampling terminal (D) is higher than the voltage obtained by dividing the voltage output by the rectifying circuit after the voltage at the working ground end of the rectifying circuit is divided by the six resistor (R3) and the first resistor (R9), and the voltage comparing circuit controls the selecting circuit to select the live wire (J1) is the branch where the zero wire is located, so that the live wire (J1) is connected with the zero wire layer (J3).

2. The electronic circuit according to claim 1, wherein the voltage comparing circuit comprises a first operational amplifier (U1) and a second operational amplifier (U2), wherein a non-inverting input terminal of the first operational amplifier (U1) is connected with the voltage sampling terminal (D), an output terminal of the first operational amplifier is connected with a non-inverting input terminal of the second operational amplifier (U2) through a second resistor (R8), inverting input terminals of the first operational amplifier (U1) and the second operational amplifier (U2) each are connected to the voltage dividing circuit, and an output terminal of the second operational amplifier (U2) is connected with the selecting circuit.

3. The electronic circuit according to any one of claims 1-2, wherein the voltage dividing circuit comprises a third resistor (R5) and a fourth resistor (R4), wherein one terminal of the third resistor is connected with an output terminal of the rectifying circuit, one terminal of the fourth resistor is connected in series with the other terminal of the third resistor (R5), the other terminal of the fourth resistor is grounded, wherein the divided voltage is supplied, through two branches, to the inverting input terminals of the first operational amplifier (U1) and the second operational amplifier (U2).

4. The electronic circuit according to claim 1, wherein the selecting circuit comprises a relay coil, a third diode (D5), a double throw switch and a triode (Q1), wherein the third diode, across both terminals of the relay coil, is connected in parallel with the relay coil, the double throw switch acts in cooperation with the relay coil, one terminal of the relay coil is connected with one terminal of the third resistor (R5) of the voltage dividing circuit, the other terminal of the relay coil is connected with a collector of the triode (Q1), a base of the triode (Q1) is connected through a fifth resistor (R7) with the output terminal of the second operational amplifier (U2), an emitter of the triode (Q1) is grounded, a first contact (F) of the double throw switch is connected with the live wire (J1), a second contact (G) of the double throw switch is correspondingly connected with the anode of the second diode (D2) and the second contact (G) is normally closed, and a fixed terminal (E) of the double throw switch is connected with the zero wire layer (J3) of an external device.

5. The electronic circuit according to claim 4, wherein the other terminal of the fourth resistor (R4) is further connected with one terminal of the sixth resistor (R3), the other terminal of the sixth resistor (R3) is connected in series with one terminal of the first resistor (R9), the other terminal of the first resistor (R9) is connected with the protective ground wire (J4) directly or through a serially connected capacitor.

6. The electronic circuit according to claim 5, wherein the electronic circuit further comprises: an overcurrent protection circuit located in front of the live wire (J1) ; the step-down circuit located between the overcurrent protection circuit and the rectifying circuit; a first filtering circuit for filtering an output of the rectifying circuit; a driving circuit for supplying a driving power to the first operational amplifier and the second operational amplifier; a second filtering circuit for filtering a voltage of the first operational amplifier (U1) ; and a third filtering circuit for filtering a voltage of the second operational amplifier (U2), wherein the first contact (F) of the double throw switch is connected between the overcurrent protection circuit and the step-down circuit.

7. The electronic circuit according to claim 6, wherein the overcurrent protection circuit is an overcurrent protection fuse (F1); the step-down circuit is consisted of a seventh resistor (R2) and a first capacitor (C1) connected in parallel with each other; the first filtering circuit comprises an eighth resistor (R1) and a first polar capacitor (C2), one terminal of the eighth resistor being connected with the cathode of the second diode (D2), the other terminal of the eighth resistor being connected with the one terminal of the third resistor (R5), one terminal of the first polar capacitor being connected with the eighth resistor (R1), and the other terminal of the first polar capacitor being grounded; the driving circuit comprises a ninth resistor (R6), one terminal of the ninth resistor being connected with the one terminal of the third resistor (R5), and the other terminal of the ninth resistor being connected for supplying, through two branches, power to the first operational amplifier (U1) and the second operational amplifier (U2); the second filtering circuit comprises a second capacitor (C5) and a second polar capacitor (C3) connected in parallel with each other, one terminals of the second capacitor and the second polar capacitor being connected with the other terminal of the ninth resistor (R6), and the other terminals of the second capacitor and the second polar capacitor being grounded; and the third filtering circuit is a third polar capacitor (C4), one terminal of the third polar capacitor being connected with the non-inverting input terminal of the second operational amplifier (U2), and the other terminal of the third polar capacitor being grounded.

## Patentansprüche

1. Elektronische Schaltung zum Selbstidentifizieren eines Nullleiters, umfassend einen stromführenden Leiteranschluss (J1), einen Nullleiteranschluss (J2) und eine Spannungsabtastungsklemme (D), wobei der Nullleiteranschluss und der stromführende Leiter (J1) eine Schleife bilden, und wobei die Spannungsabtastungsklemme mit einem Schutzleiter (J4) über einen ersten Widerstand (R9) verbunden ist, **dadurch gekennzeichnet, dass** die elektronische Schaltung weiter umfasst:
eine Gleichrichterschaltung, die sich zwischen einer Spannungsteilerschaltung und dem stromführenden Leiter (J1) befindet und konfiguriert ist, Wechselstrom von dem stromführenden Leiter (J1) gleichzurichten, um eine stabile Stromspannung auszugeben, wobei die Gleichrichterschaltung eine erste Diode (D1), eine zweite Diode (D2), eine erste Spannungsreglerröhre (D3) und eine zweite Spannungsreglerröhre (D4) umfasst, wobei eine Anode der ersten Diode (D1) mit einer Kathode der ersten Spannungsreglerröhre (D3) verbunden ist und mit dem stromführenden Leiter (J1) durch eine Abwärtsschaltung verbunden ist, eine Kathode der ersten Diode (D1) mit einer Kathode der zweiten Diode (D2) verbunden ist, eine Anode der zweiten Diode (D2) mit dem Nullleiter (J2) und einer Kathoden der zweiten Spannungsreglerröhre (D4) verbunden ist, eine Anode der ersten Spannungsreglerröhre (D3) mit einem Arbeitsgrundende und einer Anode der zweiten Spannungsreglerröhre (D4) verbunden ist;
die Spannungsteilerschaltung, die konfiguriert ist, eine Spannung, die von der Gleichrichterschaltung ausgegeben wird, zu teilen und eine feste Spannung, die durch das Teilen erhalten wird, an eine Spannungsvergleicherschaltung zu übertragen;
den Schutzleiter (J4), der mit dem Arbeitsgrundende der Gleichrichterschaltung durch den ersten Widerstand (R9) und einen sechsten Widerstand (R3) verbunden ist, die in Serienschaltung verbunden sind, wobei die Spannungsabtastungsklemme (D) zwischen dem sechsten Widerstand (R3) und dem ersten Widerstand (R9) bereitgestellt ist;
die Spannungsvergleicherschaltung, die konfiguriert ist, eine Spannung an der Spannungsabtastungsklemme (D) mit einer Spannung zu vergleichen, die erhalten wird, indem die Spannung, die von der Gleichrichterschaltung ausgegeben wird, geteilt wird; und
eine Wählerschaltung, die konfiguriert ist, mit einer Ausgangsklemme der Spannungsvergleicherschaltung verbunden zu werden, und basierend auf einem Ausgangssignal der Spannungsvergleicherschaltung einen Zweig zu wählen, wo sich der Nullleiter befindet, wobei, wenn der stromführende Leiter (J1) mit einem stromführenden Leiteranschluss verbunden ist und der Nullleiter (J2) mit einem Nullleiteranschluss verbunden ist, eine Spannung zwischen dem Arbeitsgrundende der Gleichrichterschaltung und dem Schutzleiter (J4) eine Spannung ist, die erhalten wird, nachdem eine Spannung, die von dem stromführenden Leiter (J1) eingegeben wird, von der Abwärtsschaltung und der ersten Spannungsreglerröhre (D3) verarbeitet wird, die Spannung an der Spannungsabtastungsklemme (D) geringer ist als die Spannung, die erhalten wird, indem die Spannung, die von der Gleichrichterspannung ausgegeben wird, geteilt wird, nachdem die Spannung an dem Arbeitsgrundende der Gleichrichterschaltung von dem sechsten Widerstand (R3) und dem ersten Widerstand (R9) geteilt wird, und die Spannungsvergleicherschaltung die Wählerschaltung ansteuert, zu wählen, dass der Nullleiter (J2) der Zweig ist, wo sich der Nullleiter befindet, sodass der Nullleiter (J2) mit einer Nullleiterschicht (J3) verbunden ist; und
wenn der stromführende Leiter (J1) mit dem Nullleiteranschluss verbunden ist und der Nullleiter (J2) mit dem stromführenden Leiteranschluss verbunden ist, die Spannung zwischen dem Arbeitsgrundende der Gleichrichterschaltung und dem Schutzleiter (J4) eine Spannung ist, die erhalten wird, nachdem eine Spannung, die von dem Nullleiter (J2) eingegeben wird, von der zweiten Spannungsreglerröhre (D4) verarbeitet wird, die Spannung an der Spannungsabtastungsklemme (D) höher ist als die Spannung, die erhalten wird, indem die Spannung, die von der Gleichrichterspannung ausgegeben wird, geteilt wird, nachdem die Spannung an dem Arbeitsgrundende der Gleichrichterschaltung von dem sechsten Widerstand (R3) und dem ersten Widerstand (R9) geteilt wird, und die Spannungsvergleicherschaltung die Wählerschaltung ansteuert, zu wählen, dass der stromführende Leiter (J1) der Zweig ist, wo sich der Nullleiter befindet, sodass der stromführende Leiter (J1) mit der Nullleiterschicht (J3) verbunden ist.

2. Elektronische Schaltung nach Anspruch 1, wobei die Spannungsvergleicherschaltung einen ersten Operationsverstärker (U1) und einen zweiten Operationsverstärker (U2) umfasst, wobei eine nichtinvertierende Eingangsklemme des ersten Operationsverstärkers (U1) mit der Spannungsabtastungsklemme (D) verbunden ist, eine Ausgangsklemme des ersten Operationsverstärkers mit einer nichtinvertierenden Eingangsklemme des zweiten Operationsverstärkers (U2) durch einen zweiten Widerstand (R8) verbunden ist, invertierende Eingangsklemmen des ersten Operationsverstärkers (U1) und des zweiten Operationsverstärkers (U2) jeweils mit der Spannungsteilerschaltung verbunden sind, und eine Ausgangsklemme des zweiten Operationsverstärkers (U2) mit der Wählerschaltung verbunden ist.

3. Elektronische Schaltung nach einem der Ansprüche 1 bis 2, wobei die Spannungsteilerschaltung einen dritten Widerstand (R5) und einen vierten Widerstand (R4) umfasst, wobei eine Klemme des dritten Widerstands mit einer Ausgangsklemme der Gleichrichterschaltung verbunden ist, eine Klemme des vierten Widerstands in Serienschaltung mit der anderen Klemme des dritten Widerstands (R5) verbunden ist, die andere Klemme des vierten Widerstands geerdet ist, wobei die geteilte Spannung, durch zwei Zweige, den invertierenden Eingangsklemmen des ersten Operationsverstärkers (U1) und des zweiten Operationsverstärkers (U2) zugeführt wird.

4. Elektronische Schaltung nach Anspruch 1, wobei die Wählerschaltung eine Relaisspule, eine dritte Diode (D5), einen Zweiwegeumschalter und eine Triode (Q1) umfasst, wobei die dritte Diode, über beide Klemmen der Relaisspule, in Parallelschaltung mit der Relaisspule verbunden ist, der Zweiwegeumschalter zusammenwirkend mit der Relaisspule agiert, eine Klemme der Relaisspule mit einer Klemme des dritten Widerstands (R5) der Spannungsteilerschaltung verbunden ist, die andere Klemme der Relaisspule mit einem Kollektor der Triode (Q1) verbunden ist, eine Basis der Triode (Q1) durch einen fünften Widerstand (R7) mit der Ausgangsklemme des zweiten Operationsverstärkers (U2) verbunden ist, ein Emitter der Triode (Q1) geerdet ist, ein erster Kontakt (F) des Zweiwegeumschalters mit dem stromführenden Leiter (J1) verbunden ist, ein zweiter Kontakt (G) des Zweiwegeumschalters entsprechend mit der Anode der zweiten Diode (D2) verbunden ist und der zweite Kontakt (G) normal geschlossen ist, und eine feste Klemme (E) des Zweiwegeumschalters mit der Nullleiterschicht (J3) einer externen Vorrichtung verbunden ist.

5. Elektronische Schaltung nach Anspruch 4, wobei die andere Klemme des vierten Widerstands (R4) weiter mit einer Klemme des sechsten Widerstands (R3) verbunden ist, die andere Klemme des sechsten Widerstands (R3) in Serienschaltung mit einer Klemme des ersten Widerstands (R9) verbunden ist, die andere Klemme des ersten Widerstands (R9) mit dem Schutzleiter (J4) direkt oder durch einen seriell verbundenen Kondensator verbunden ist.

6. Elektronische Schaltung nach Anspruch 5, wobei die elektronische Schaltung weiter umfasst: eine Überstromschutzschaltung, die sich vor dem stromführenden Leiter (J1) befindet; die Abwärtsschaltung, die sich zwischen der Überstromschutzschaltung und der Gleichrichterschaltung befindet; eine erste Filterschaltung zum Filtern eines Ausgangs der Gleichrichterschaltung; eine Antriebsschaltung zum Zuführen einer Antriebsleistung zu dem ersten Operationsverstärker und dem zweiten Operationsverstärker ; eine zweite Filterschaltung zum Filtern einer Spannung des ersten Operationsverstärkers (U1); und eine dritte Filterschaltung zum Filtern einer Spannung des zweiten Operationsverstärkers (U2), wobei der erste Kontakt (F) des Zweiwegeumschalters zwischen der Überstromschutzschaltung und der Abwärtsschaltung verbunden ist.

7. Elektronische Schaltung nach Anspruch 6, wobei die Überstromschutzschaltung eine Überstromsicherung (F1) ist; die Abwärtsschaltung aus einem siebenten Widerstand (R2) und einem ersten Kondensator (C1) besteht, die in Parallelschaltung miteinander verbunden sind; die erste Filterschaltung einen achten Widerstand (R1) und einen ersten polabhängigen Kondensator (C2) umfasst, eine Klemme des achten Widerstands mit der Kathode der zweiten Diode (D2) verbunden ist, die andere Klemme des achten Widerstands mit der einen Klemme des dritten Widerstands (R5) verbunden ist, eine Klemme des ersten polabhängigen Kondensators mit dem achten Widerstand (R1) verbunden ist und die andere Klemme des ersten polabhängigen Kondensators geerdet ist; die Antriebsschaltung einen neunten Widerstand (R6) umfasst, eine Klemme des neunten Widerstands mit der einen Klemme des dritten Widerstands (R5) verbunden ist und die andere Klemme des neunten Widerstands verbunden ist, um, durch zwei Zweige, dem ersten Operationsverstärker (U1) und dem zweiten Operationsverstärker (U2) Leistung zuzuführen; die zweite Filterschaltung einen zweiten Kondensator (C5) und einen zweiten polabhängigen Kondensator (C3) umfasst, die in Parallelschaltung miteinander verbunden sind, die einen Klemmen des zweiten Kondensators und des zweiten polabhängigen Kondensators mit der anderen Klemme des neunten Widerstands (R6) verbunden sind und die andere Klemmen des zweiten Kondensators und des zweiten polabhängigen Kondensators geerdet sind; und die dritte Filterschaltung ein dritter polabhängiger Kondensator (C4) ist, eine Klemme des dritten polabhängigen Kondensators mit der nichtinvertierenden Eingangsklemme des zweiten Operationsverstärkers (U2) verbunden ist und die andere Klemme des dritten polabhängigen Kondensators geerdet ist.

## Revendications

1. Circuit électronique d'auto-identification d'un fil à zéro, comprenant un port de fil sous tension (J1), un port de fil à zéro (J2) et une borne d'échantillonnage de tension (D), le port de fil à zéro et le fil sous tension (J1) formant une boucle, et la borne d'échantillonnage de tension étant connectée à un fil de masse de protection (J4) via une première résistance (R9), **caractérisé en ce que** le circuit électronique comprend en outre :
un circuit de redressement, situé entre un circuit de division de tension et le fil sous tension (J1) et configuré pour redresser un courant alternatif provenant du fil sous tension (J1) pour délivrer en sortie une tension électrique stable, dans lequel le circuit de redressement comprend une première diode (D1), une deuxième diode (D2), un premier tube régulateur de tension (D3) et un second tube régulateur de tension (D4), dans lequel une anode de la première diode (D1) est connectée à une cathode du premier tube régulateur de tension (D3) et est connectée au fil sous tension (J1) au travers d'un circuit abaisseur, une cathode de la première diode (D1) est connectée à une cathode de la deuxième diode (D2), une anode de la deuxième diode (D2) est connectée au fil à zéro (J2) et à une cathode du second tube régulateur de tension (D4), une anode du premier tube régulateur de tension (D3) est connectée à une extrémité de masse de travail et à une anode du second tube régulateur de tension (D4) ;
le circuit de division de tension, configuré pour diviser une tension délivrée en sortie par le circuit de redressement et émettre une tension fixe obtenue par la division vers un circuit de comparaison de tension ;
le fil de masse de protection (J4), connecté à l'extrémité de masse de travail du circuit de redressement au travers de la première résistance (R9) et d'une sixième résistance (R3) qui sont connectées en série, dans lequel la borne d'échantillonnage de tension (D) est ménagée entre la sixième résistance (R3) et la première résistance (R9) ;
le circuit de comparaison de tension configuré pour comparer une tension à la borne d'échantillonnage de tension (D) avec une tension obtenue par la division de la tension délivrée en sortie par le circuit de redressement ; et
un circuit de sélection configuré pour être connecté à une borne de sortie du circuit de comparaison de tension, et sélectionner, sur la base d'un signal de sortie du circuit de comparaison de tension, une branche où le fil à zéro est situé,
dans lequel lorsque le fil sous tension (J1) est connecté à un port de fil sous tension et le fil à zéro (J2) est connecté à un port de fil à zéro, une tension entre l'extrémité de masse de travail du circuit de redressement et le fil de masse de protection (J4) est une tension obtenue après qu'une tension entrée à partir du fil sous tension (J1) est traitée par le circuit abaisseur et le premier tube régulateur de tension (D3), la tension à la borne d'échantillonnage de tension (D) est inférieure à la tension obtenue par la division de la tension délivrée en sortie par le circuit de redressement après que la tension à l'extrémité de masse de travail du circuit de redressement est divisée par la sixième résistance (R3) et la première résistance (R9), et le circuit de comparaison de tension commande le circuit de sélection pour sélectionner le fil à zéro (J2) est la branche où le fil à zéro est situé, de sorte que le fil à zéro (J2) est connecté à une couche de fil à zéro (J3) ; et
lorsque le fil sous tension (J1) est connecté au port de fil à zéro et le fil à zéro (J2) est connecté au port de fil sous tension, la tension entre l'extrémité de masse de travail du circuit de redressement et le fil de masse de protection (J4) est une tension obtenue après qu'une tension entrée à partir du fil à zéro (J2) est traitée par le second tube régulateur de tension (D4), la tension à la borne d'échantillonnage de tension (D) est supérieure à la tension obtenue par la division de la tension délivrée en sortie par le circuit de redressement après que la tension à l'extrémité de masse de travail du circuit de redressement est divisée par la sixième résistance (R3) et la première résistance (R9), et le circuit de comparaison de tension commande le circuit de sélection pour sélectionner le fil sous tension (J1) est la branche où le fil à zéro est situé, de sorte que le fil sous tension (J1) est connecté à la couche de fil à zéro (J3).

2. Circuit électronique selon la revendication 1, dans lequel le circuit de comparaison de tension comprend un premier amplificateur opérationnel (U1) et un second amplificateur opérationnel (U2), dans lequel une borne d'entrée non inverseuse du premier amplificateur opérationnel (U1) est connectée à la borne d'échantillonnage de tension (D), une borne de sortie du premier amplificateur opérationnel est connectée à une borne d'entrée non inverseuse du second amplificateur opérationnel (U2) au travers d'une deuxième résistance (R8), les bornes d'entrée inverseuses du premier amplificateur opérationnel (U1) et du second amplificateur opérationnel (U2) sont chacune connectées au circuit de division de tension, et une borne de sortie du second amplificateur opérationnel (U2) est connectée au circuit de sélection.

3. Circuit électronique selon l'une quelconque des revendications 1 à 2, dans lequel le circuit de division de tension comprend une troisième résistance (R5) et une quatrième résistance (R4), dans lequel une borne de la troisième résistance est connectée à une borne de sortie du circuit de redressement, une borne de la quatrième résistance est connectée en série à l'autre borne de la troisième résistance (R5), l'autre borne de la quatrième résistance est mise à la masse, dans lequel la tension divisée alimente, au travers de deux branches, les bornes d'entrée inverseuses du premier amplificateur opérationnel (U1) et du second amplificateur opérationnel (U2).

4. Circuit électronique selon la revendication 1, dans lequel le circuit de sélection comprend une bobine relais, une troisième diode (D5), un interrupteur unipolaire bidirectionnel et une triode (Q1), dans lequel la troisième diode, entre les deux bornes de la bobine relais, est connectée en parallèle à la bobine relais, l'interrupteur unipolaire bidirectionnel agit en coopération avec la bobine relais, une borne de la bobine relais est connectée à une borne de la troisième résistance (R5) du circuit de division de tension, l'autre borne de la bobine relais est connectée à un collecteur de la triode (Q1), une base de la triode (Q1) est connectée au travers d'une cinquième résistance (R7) à la borne de sortie du second amplificateur opérationnel (U2), un émetteur de la triode (Q1) est mis à la masse, un premier contact (F) de l'interrupteur unipolaire bidirectionnel est connecté au fil sous tension (J1), un second contact (G) de l'interrupteur unipolaire bidirectionnel est connecté de manière correspondante à l'anode de la deuxième diode (D2) et le second contact (G) est normalement fermé, et une borne fixe (E) de l'interrupteur unipolaire bidirectionnel est connectée à la couche de fil à zéro (J3) d'un dispositif externe.

5. Circuit électronique selon la revendication 4, dans lequel l'autre borne de la quatrième résistance (R4) est en outre connectée à une borne de la sixième résistance (R3), l'autre borne de la sixième résistance (R3) est connectée en série à une borne de la première résistance (R9), l'autre borne de la première résistance (R9) est connectée au fil de masse de protection (J4) directement ou au travers d'un condensateur connecté en série.

6. Circuit électronique selon la revendication 5, dans lequel le circuit électronique comprend en outre : un circuit de protection contre les surintensités situé à l'avant du fil sous tension (J1) ; le circuit abaisseur situé entre le circuit de protection contre les surintensités et le circuit de redressement ; un premier circuit de filtrage pour filtrer une sortie du circuit de redressement ; un circuit d'attaque pour alimenter avec une énergie électrique d'attaque le premier amplificateur opérationnel et le second amplificateur opérationnel ; un deuxième circuit de filtrage pour filtrer une tension du premier amplificateur opérationnel (U1) ; et un troisième circuit de filtrage pour filtrer une tension du second amplificateur opérationnel (U2), dans lequel le premier contact (F) de l'interrupteur unipolaire bidirectionnel est connecté entre le circuit de protection contre les surintensités et le circuit abaisseur.

7. Circuit électronique selon la revendication 6, dans lequel le circuit de protection contre les surintensités est un fusible de protection contre les surintensités (F1) ; le circuit abaisseur est constitué d'une septième résistance (R2) et d'un premier condensateur (C1) connectés en parallèle l'un à l'autre ; le premier circuit de filtrage comprend une huitième résistance (R1) et un premier condensateur polaire (C2), une borne de la huitième résistance étant connectée à la cathode de la deuxième diode (D2), l'autre borne de la huitième résistance étant connectée à ladite une borne de la troisième résistance (R5), une borne du premier condensateur polaire étant connectée à la huitième résistance (R1), et l'autre borne du premier condensateur polaire étant mise à la masse ; le circuit d'attaque comprend une neuvième résistance (R6), une borne de la neuvième résistance étant connectée à ladite une borne de la troisième résistance (R5), et l'autre borne de la neuvième résistance étant connectée pour alimenter, au travers de deux branches, en énergie électrique le premier amplificateur opérationnel (U1) et le second amplificateur opérationnel (U2) ; le deuxième circuit de filtrage comprend un second condensateur (C5) et un deuxième condensateur polaire (C3) connectés en parallèle l'un à l'autre, une borne du second condensateur et une borne du deuxième condensateur polaire étant connectées à l'autre borne de la neuvième résistance (R6), et les autres bornes du second condensateur et du deuxième condensateur polaire étant mises à la masse ; et le troisième circuit de filtrage est un troisième condensateur polaire (C4), une borne du troisième condensateur polaire étant connectée à la borne d'entrée non inverseuse du second amplificateur opérationnel (U2), et l'autre borne du troisième condensateur polaire étant mise à la masse.
